Europäisches Patentamt

European Patent Office

Office européen des brevets

(19)

(11) Publication number: **0 155 740**

**A2**

(12) **EUROPEAN PATENT APPLICATION**

(21) Application number: **85200403.5**

(22) Date of filing: **18.03.85**

(51) Int. Cl.⁴: **H 04 M 9/08**

(30) Priority: **21.03.84 GB 8407362**

(43) Date of publication of application:
**25.09.85 Bulletin 85/39**

(84) Designated Contracting States:
**DE FR GB IT SE**

(72) Inventor: **Phillips, Ian**
**c/o TMC Limited Swindon Road**
**Malmesbury Wiltshire(GB)**

(72) Inventor: **Hibberd, Lawrence John**
**c/o TMC Limited Swindon Road**
**Malmesbury Wiltshire(GB)**

(72) Inventor: **Williams, Leslie Herbert**
**c/o TMC Limited Swindon Road**
**Malmesbury Wiltshire(GB)**

(71) Applicant: **PHILIPS ELECTRONIC AND ASSOCIATED**
**INDUSTRIES LIMITED**
**Arundel Great Court 8 Arundel Street**
**London WC2R 3DT(GB)**

(84) Designated Contracting States:
**GB**

(71) Applicant: **N.V. Philips' Gloeilampenfabrieken**
**Groenewoudseweg 1**
**NL-5621 BA Eindhoven(NL)**

(84) Designated Contracting States:
**DE FR IT SE**

(74) Representative: **Andrews, Arthur Stanley et al,**
**Philips Electronic and Associated Industries Limited**
**Patent Department Mullard House Torrington Place**
**London WC1E 7HD(GB)**

(54) Loudspeaking telephone instrument.

(57) A loudspeaking telephone includes first and second comb filters (2,4) one in the receive path and the other in the transmit path and a control arrangement (11) which controls the pass and stop bands of the comb filters (2,4). The comb filters (2,4) have interlaced characteristics, i.e. the stopbands of one lie in the passbands of the other and *vice versa*. Thus signals passing through the comb filter (2) will be rejected by the comb filter (4) thus preventing their being emitted by the loudspeaker (3) and being coupled back to the microphone (1).

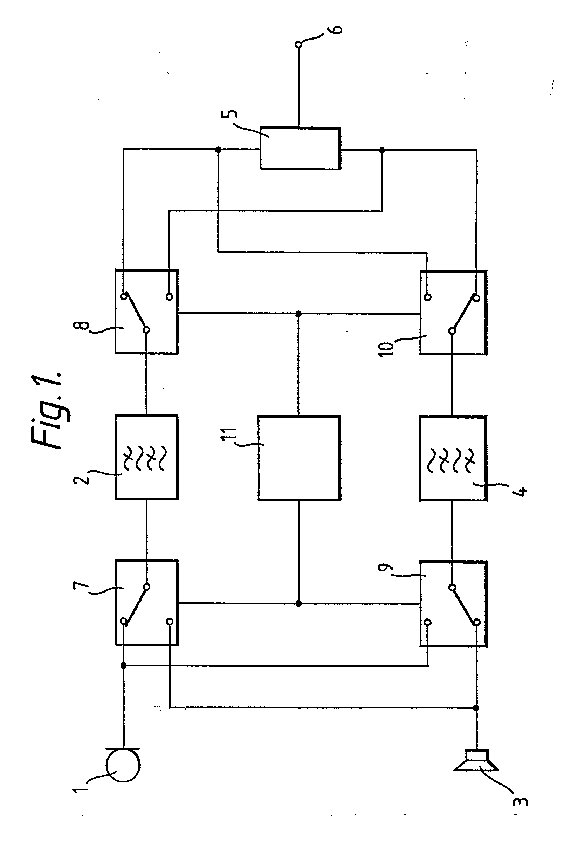

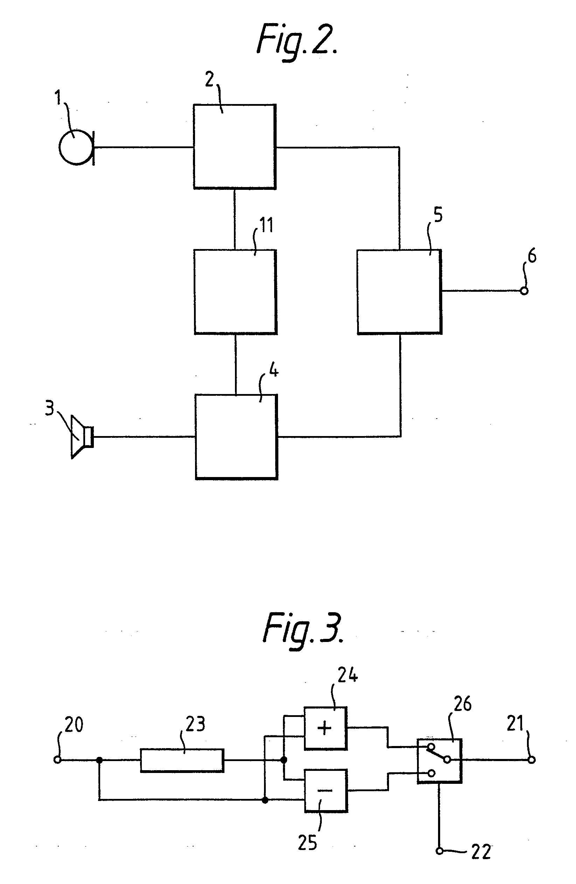

The pass and stop bands of the comb filters (2,4) are interchangeable in dependence on whether the loudspeaking telephone instrument is being used by the called or calling party. The control arrangement (11) detects which party is using the instrument and either interchanges the positions of the comb filters (2,4) by means of switches (Figure 1) or modifies the characteristics of the individual comb filters (2,4) by switching their internal circuitry (Figure 2).

*Fig.2.*

## LOUDSPEAKING TELEPHONE INSTRUMENT.

The invention relates to a loudspeaking telephone instrument path which comprises a microphone and a first comb filter and a receive path which comprises a loudspeaker and a second comb filter, wherein the passbands of the first comb filter are located in the stopbands of the second comb filter and vice versa.

The purpose of the loudspeaking telephone instrument is to allow hands free communication, that is to dispense with the telephone handset by substituting for it a microphone and loudspeaker, normally mounted within the instrument casing. Thus the user can communication without being in physical contact with the telephone instrument which gives the advantage of greater flexibility, for example in referring to documents. The main problem which faces the designer of loudspeaking telephones is to overcome acoustic instability which arises from the removal of the isolation, which is inherent in the telephone handset, between the send and receive transducers.

A loudspeaking telephone instrument as set forth in the opening paragraph is known from US Patent No. 3622714.

The inclusion of the first and second comb filters breaks the feedback path between the microphone and loudspeaker since all the frequency components of the signal passing through the first comb filter are located in the stop bands of the second comb filter preventing them being passed to the loudspeaker. Similarly all the frequency components of the signal emitted by the loudspeaker are located in the stop bands of the first comb filter preventing them from being passed around the loop formed by the loudspeaker, microphone, first comb filter, hybrid circuit, and second comb filter.

However, in the arrangement disclosed in that patent it is necessary when two loudspeaking telephones are to communicate that they have their filters oppositely arranged i.e. that the transmit filter of one is identical to the receive filter of the other and vice versa. This is not achievable in a normal communication system where any subscriber can be connected to any other subscriber. This can be overcome by connecting the filters in the four wire path in the central exchange but in that case either every transmission path has to be provided with the filters or the provision of loudspeaking telephones has to be restricted to those who have access to the particular transmission paths. Further it is desirable that the filters should be fitted only where required for reasons of economy. Consequently it is desirable to locate the filters in the loudspeaking telephone instruments.

It is an object of the invention to enable the provision of a loudspeaking telephone instrument of the type set forth in the opening paragraph which can be connected to a conventional telephone network and communicate with other substantially identical loudspeaking telephone instruments.

The invention provides a loudspeaking telephone instrument as set forth in the opening paragraph characterised by means for interchanging the pass and stop bands of the first and second comb filters in dependence on whether the instrument is being used by the called or calling party. .

These means allow communication between more than one loudspeaking telephone according to the invention since by interchanging the pass and stop bands of the first and second comb filters in dependence on whether the instrument is being used by the called or calling party it can be arranged that the passbands of the transmit path of one loudspeaking telephone instrument coincide with the passbands of the receive path of the other loudspeaking telephone instrument. Consequently substantially identical loudspeaking telephone instruments can be included within a standard telephone switching system without imposing any restraints on the system.

Controlling means comprising a ringing signal detector may be provided for controlling said interchanging means. Thus if a ringing signal is detected by the instrument it may be assumed to be the called party. Alternatively the controlling means may comprise a manually operable switching arrangement for operation by the subscriber on the initiation of a call. In this case a switch on the instrument may be manually operated whenever a call is initiated. Thus the loudspeaking telephone instrument would normally be arranged to receive calls and the stop and pass bands would be interchanged whenever a call is initiated.

The interchanging means may comprise means for changing the frequencies of the stop and pass bands in the first and second comb filters. In which case the first and second comb filters may be of the type in which the input signal is combined with a delayed version of the input signal to produce a filtered output signal and the interchanging means may comprise means for selectively combining by adding or subtracting the input and delayed input signals.

In a second embodiment the first and second comb filters may each be formed by a plurality of switched capacitor filters and the interchanging means may comprise means for controlling the clock frequency of the switched capacitor filters to interchange their stop and pass band frequencies. In a further embodiment of the interchanging means may be effective to interchange the positions of the first and second comb filters. In this case the interchanging means may comprise changeover switches. The changeover switches may comprise relays.

The first and second comb filters may have a linear frequency to bandwidth ratio over the speech band. This is in contrast with the loudspeaking telephone instrument described and claimed in our co-pending application (PHB 33059) where the passbands have to be spaced at regular intervals across the speech band these intervals being equal to the frequency by which the frequency shifter shifts the input speech signal.

Embodiments of the invention will now be described, by way of example, with reference to the accompanying drawing, in which:-

Figure 1 shows in block schematic form a first embodiment of a loudspeaking telephone instrument according to the invention.

Figure 2 shows in block schematic form a second embodiment of a loudspeaking telephone instrument according to the invention, and

Figure 3 shows one form of comb filter suitable for use in the loudspeaking telephone instrument shown in Figure 2.

As shown in Figure 1 a loudspeaking telephone comprises a transmit path comprising a microphone 1 and a comb filter 2; a receive path comprising a loudspeaker 3 and a second comb filter 4; and a hybrid circuit 5. The hybrid circuit 5 has a first port for connection to the receive path, a second port for connection to the transmit path, and a third port for connection to a subscribers line _via_ a terminal 6. The first comb filter 2 has a series of pass and stop bands extending across the speech frequency band. Similarly the second comb filter 4 has a series of pass and stop bands extending across the speech frequency band. The passbands of the first comb filter 2 are arranged to lie within the stopbands of the second comb filter 4 and the passbands of the second comb filter 4 are arranged to lie within the stopbands of the first comb filter 2.

For the arrangement shown, if the full spectral signal produced by the microphone 1 is f the comb filter 2 passes a signal having a spectral function $f_1$ and rejects a signal having a spectral function $f_2$. Conversely the comb filter 4 passes a signal having a spectral function $f_2$ and rejects a signal having a spectral function $f_1$. Thus the spectral function of the signal at the output of the comb filter 2 is $f_1$ and the majority of this signal is passed by the hybrid circuit 5 to the subscribers line _via_ the terminal 6. Due to a less than perfect hybrid circuit some of the signal $f_1$ will leak across the hybrid from the transmit path to the receive path. This portion of the signal $f_1$ $(= \frac{f_1}{R})$ will lie in the stop bands of the comb filter 4 and consequentally not be passed to the loudspeaker 3, thus breaking the loop.

The loudspeaking telephone instrument described so far is adequate whenever no other loudspeaking telephone of this type is included within a system. However if another loudspeaking telephone instrument of this type is included in a system and communication between the two loudspeaking telephone instruments is desired further steps have to be taken, since the passbands of the first comb filter 2 in the first loudspeaking telephone instrument will lie within the stop bands of the second comb filter 4 in the second loudspeaking telephone instrument and hence communication will not be possible. To overcome this problem the positions of the first and second comb filters 2 and 4 may be made interchangeable. This can be achieved by means of four changeover switches 7,8,9, and 10 controlled by a control arrangement 11. Thus the control arrangement 11 detects whether the loudspeaking telephone instrument is being used by the called or calling party and adjusts the changeover switches accordingly. If the loudspeaking telephone instrument is being used by the calling party the changeover switches 7 to 10 are in the positions shown in the drawing, whereas if the control circuit 11 detects that the loudspeaking instrument is being used by the called party then it causes the changeover switches 7 to 10 to change state, thus interchanging the positions of the comb filter 2 and 4. The proceedure could of course be of the reverse direction also so that the positions shown in the drawing may be for the called party whereas when the instrument is being used by the calling party the changeover switches are changed in state. However all loudspeaking telephones within a single system must adopt the same proceedure. The control arrangement 11 may for example detect ringing signals on the line the detection of ringing signal meaning that the instrument is being used by the called party. A suitable ringing signal detector is described in U.K. Patent Application No. 2034997. It is of course necessary to store the fact that the ringing signal has been detected for the duration of the call to ensure that the comb filters remain in the interchanged positions. As an alternative the control circuit 11 may be controlled as the calling party by, for example, requiring the calling party to operate a switch when the call is initiated. Thus the telephone instrument may include a switch to be operated by the calling party before establishing the connection. A further alternative method of control is to detect the generation of dialling pulses or m.f. signalling tones, the detection of which will indicate that the instrument is being used by the calling party.

The changeover switches 7 to 10 may be of any form, for example solid state switches, relays or manually operated switches. The comb filters 2 and 4 are preferably arranged so that there is a linear relationship between the frequency and the bandwidth of the pass and stop bands over the whole of the speech frequency spectrum. This enables a comparatively constant stop band attenuation to be obtained across the whole band. This is in contradistinction to the comb filters used in our co-pending application (PHB 33059) which have pass and stop bands located at fixed frequency intervals across the whole of the speech bands since their action depends on a fixed frequency shift produced by the frequency shifter. The comb filters may, for example, be of the type in which a delayed version of the signal is added to the undelayed signal or a bank of switched capacitor filters implemented as an LSI integrated circuit.

If four-wire connection is available between the loudspeaking telephones the hybrid circuit 5 may be omitted with appropriate changes being made to the switching arrangement.

Figure 2 shows a second embodiment of a loudspeaking telephone instrument according to the invention in which integers having the same function as those shown in Figure 1 have been given the same reference numerals. The loudspeaking telephone instrument shown in Figure 2 differs from that shown in Figure 1 in two respects. First the changeover switches 7,8,9 and 10 have been omitted and secondly the comb filters 2 and 4 have been arranged so that there pass and stop band frequencies may be interchanged in response to signals applied to them by the control arrangement 11. Thus, instead of interchanging the physical positions of the comb filters 2 and 4 in the circuit by means of a switching arrangement each comb filter has its pass and stopbands switchable in response to signals applied to it by the control arrangement 11.

Figure 3 shows an embodiment of a comb filter suitable for use as the comb filters 2 and 4 in the loudspeaking telephone instrument shown in Figure 2. The comb filter shown in Figure 3 has an input terminal 20, an output terminal 21, and a control input terminal 22. The input terminal 20 is connected to the input of a delay circuit 23, to a first input of an adder circuit 24, and to a first input of a subtractor circuit 25. The output of the delay circuit 23 is connected to a second input of the adder circuit 24 and to a second input of the subtractor circuit 25. The output of the adder circuit 24 and the output of the subtractor circuit 25 are connected to respective inputs of a switching arrangement 26 whose output is connected to the output terminal 21. The control input terminal 22 is connected to a control input of the switching arrangement 26. In operation the control signal in input terminal 22 will cause the switching arrangement 26 to connect the output of either the adder circuit 24 or the subtractor circuit 25 to the output terminal 21 depending on whether the loudspeaking telephone instrument is being used by the calling or called party. The control arrangement 11 will select the subtractor output of one comb filter and the adder output of the other comb filter within the loudspeaking telephone so that the stop and passbands of the two comb filters are interleaved.

If the comb filters 2 and 4 comprise a plurality of switched capacitor filters the positions of the stop and passbands can be selected by varying the clock frequency and hence the control arrangement 11 can interchange the pass and stop bands of each comb filter by applying appropriate clock signals to the filters.

CLAIMS:

1. A loudspeaking telephone instrument comprising a transmit path which comprises a microphone and a first comb filter receive path which comprises a loudspeaker and a second comb filter, wherein the passbands of the first comb filter are located in the stopbands of the second comb filter and *vice versa*, characterised by means for interchanging the pass and stop bands of the first and second comb filters in dependence on whether the instrument is being used by the called or calling party.

2. A loudspeaking telephone instrument as claimed in Claim 1, characterised by means for controlling said interchanging means, said controlling means comprising a ringing signal detector.

3. A loudspeaking telephone instrument as claimed in Claim 1, characterised by means for controlling said interchanging means, said controlling means comprising a manually operable switching arrangement for operation by the subscriber on the initiation of a call.

4. A loudspeaking telephone instrument as claimed in Claims 2 or 3, characterised in that the interchanging means comprises means for changing the frequencies of the stop and pass bands in the first and second comb filters.

5. A loudspeaking telephone as claimed in Claim 4, characterised in that the first and second comb filters are of the type in which the input signal is combined with a delayed version of the input signal to produce a filtered output signal and that the interchanging means comprises means for selectively combining by adding or subtracting the input and delayed input signals.

6. A loudspeaking telephone instrument as claimed in Claim 4, characterised in that the first and second comb filters are each formed by a plurality of switched capacitor filters and that the interchanging means comprises means for controlling the clock frequency of the switched capacitor filters to interchange their stop and pass band frequencies.

7. A loudspeaking telephone instrument as claimed in any of Claims 2 or 3, characterised in that said interchanging means is effective to interchange the positions of the first and second comb filters.

8.  A loudspeaking telephone instrument as claimed in Claim 7, characterised in that said interchanging means comprises changeover switches.

9.  A loudspeaking telephone instrument as claimed in Claim 8, characterised in that said changeover switches comprise relays.

10.  A loudspeaking telephone instrument as claimed in any preceding claim, in which the comb filters have a linear frequency to bandwidth ratio over the speech frequency band.

0155740

1-II-PHB 33060

## Fig.1.

0155740

# Fig.2.

# Fig.3.